# EUROPEAN PATENT SPECIFICATION

(11) **EP 2 935 458 B1**
(45) Date of publication and mention of the grant of the patent: **02.11.2022**
(21) Application number: 13826631.7
(22) Date of filing: 18.12.2013
(51) Int. Cl.: C08L 67/02, C08L 69/00, B29C 65/16, B29C 65/00, C08K 7/14

(54) **THERMOPLASTIC COMPOSITIONS, METHODS OF MANUFACTURE, AND ARTICLES THEREOF**
THERMOPLASTISCHE ZUSAMMENSETZUNGEN, VERFAHREN ZUR HERSTELLUNG UND ARTIKEL DARAUS
COMPOSITIONS THERMOPLASTIQUES, LEURS PROCÉDÉS DE FABRICATION, ET ARTICLES RÉALISÉS À PARTIR DESDITES COMPOSITIONS

(30) Priority: 20.12.2012 US 201213721842
(43) Date of publication of application: 28.10.2015
(73) Proprietor: SABIC Global Technologies B.V., 4612 PX Bergen op Zoom (NL)
(72) Inventor: FARRELL, Tony, NL-4612 PX Bergen op Zoom (NL); VAN ZYL, Andries J.P., NL-4612 PX Bergen op Zoom (NL); LOHMEIJER, Johannes Hubertus Gabriel Marie, NL-4612 PX Bergen op Zoom (NL)
(74) Representative: Balder IP Law, S.L.
(86) International application number: PCT/IB2013/061117
(87) International publication number: WO 2014/097196

(56) References cited:
- DE-A1- 10 330 722
- US-B1- 6 504 002

## Description

### BACKGROUND

This disclosure relates to thermoplastic compositions, in particular laser-weldable thermoplastic compositions, methods of manufacture, and articles thereof.

Thermoplastic compositions are used in the manufacture of a wide variety of products, including laser-welded products. Laser welding of two polymer parts by transmission welding requires one of the polymer parts to be substantially transparent to laser light for its transmission to the welding interface, and the other part to absorb a significant amount of the laser light, thereby generating heat for welding at the interface of the parts. External pressure is applied to ensure uninterrupted contact between the surfaces of the parts, and heat conduction between the parts results in the melting of the polymers in both the absorbing and the transmitting parts, thereby providing a weld at the interface.

Laser light of near-infrared (NIR) wavelength is used for welding. The level of NIR transmission through the transparent part should allow sufficient laser-light density to arrive at the interface to facilitate effective and rapid welding. Otherwise, joining of the two parts by laser welding would be impractical or limited to slow scan speeds. It is desired that the cycle time for assembly of parts be as short as possible.

Combined with its excellent flow when molten and its rapid crystallization upon cooling, poly(butylene terephthalate) (PBT) is highly suitable for injection molding into solid articles and parts thereof. PBT can be reinforced with glass fibers or mineral fillers and can be used in numerous applications, especially in the automotive and electrical industry, owing to its excellent electrical resistance, surface finish, and toughness. Additionally, products that incorporate PBT or a similar partially crystalline resin can provide thermal resistance in applications in which the products are subjected to short-term high heat exposure, particular electrical or automotive parts. For example, laser welding can be used for the assembly of housings for sensors or other electrical devices in an automotive vehicle.

A potential problem with welding materials based on partially crystalline resins such as PBT, however, is that such resins can also partially disperse or scatter incoming radiation. Consequently, the extent of the laser energy arriving at the joining interface can be diminished, thereby reducing the adhesion between the parts to be welded. In particular, a reduction in weld strength for a given amount of laser energy applied to the article to be welded can result in a substantial increase in laser welding assembly cycle time.

Another potential problem is that fillers, introduced into the weldable composition to increase the temperature resistance, are known to adversely affect properties of a weldable composition. Specifically, the presence of fillers such as glass fibers increase light scattering, especially when the layer thickness of the welded component parts is greater than 1.5 mm.

Internal scattering of the laser light in the transparent first (upper) part can bring about a rise in temperature, especially in thick walled parts. This can cause mobility and distortion in the join area which can lead to weld instabilities or part rupture. It is therefore beneficial to have high thermal resistance in the laser-light-transmissive part. The Vicat softening temperature, according to ISO 306 at 120°C/hour and a 50 Newton (N) load, is widely used to provide an accurate measure of the thermal resistance of a thermoplastic composition.

In view of the above, it would be desirable to improve the transmission level of NIR laser light to a weldable interface through a weldable first part, especially when formed from a composition comprising filled partially crystalline resin, thereby facilitating the joining of the first part to a second part that absorbs rather than transmits the laser light. It is desirable that the weldable first part have excellent thermal properties for weld stability and that the welded first part possess advantageous mechanical properties for use in various applications, specifically electronic, automotive, or other applications requiring durability. It would also be beneficial for a composition for a weldable transmissive part to provide consistent laser transparency across a range of thicknesses and processing conditions in order to achieve consistent weld strengths.

One approach that has been investigated to increase the laser transparency of PBT-based compositions is to blend the PBT with an amorphous component such as polycarbonate or polyester carbonate. Such compositions are disclosed in DE 10230722 (U.S. Patent No. 20070129475), U.S. Patent No. 7396428, U.S. Patent Publ. No. 20050165176, and U.S. Patent Publ. No. 2011/0256406.

An alternative approach to increase laser transparency is to speed up the rate of crystallization of the composition using a chemical nucleant. This can occur by chemical reaction between the nucleating agent and polymeric end groups of PBT polymer to produce ionic end groups that enhance the rate of crystallization. Such compositions are disclosed, for example, in U.S. Patent Publ. 2011/0288220 and U.S. Patent Publ. 2011/0306707. The addition of such chemical nucleants, however, can lower the molecular weight of a crystalline material and lead to unstable melt viscosity. Additionally, such chemical nucleants can substantially degrade many of the amorphous materials used in PBT blends such as polycarbonates and polyester carbonates, causing unstable melt viscosities and other undesirable defects such as splay and jetting (deformations due to turbulent flow).

### SUMMARY

In view of the above and the challenges involved, it is desired to achieve improved NIR transmission for laser-weldable thermoplastics, especially compositions comprising glass fibers or other fillers that provide heat resistance.

In one embodiment, a weldable composition made by a process comprising melt blending a combination of:
(a) from more than 10 to 70 weight percent of a partially crystalline thermoplastic polyester component selected from poly(butylene terephthalate), poly(ethylene terephthalate), poly(butylene terephthalate) copolymers, poly(ethylene terephthalate) copolymers, and combinations thereof;
(b) from 10 to 60 weight percent of amorphous polycarbonate having greater than 150 ppm to 10,000 ppm of Fries rearranged monomeric units;
(c) from 5 to 50 weight percent of a filler; and
(d) optionally from 0.01 to 10 weight percent of an antioxidant, mold release agent, colorant, stabilizer, or a combination thereof, wherein the melt blended composition has a polycarbonate aryl hydroxy end-group content of at least 300 ppm; and wherein the composition, when molded into an article having a 2.0 mm thickness, provides a near infrared transmission at 960 nanometers of greater than 45%.

In another embodiment, a weldable composition comprises a product made by a process of melt blending a combination of:
(a) from 20 to 60 weight percent of a partially crystalline polyester component selected from partially crystalline poly(butylene terephthalate), poly(ethylene terephthalate), poly(butylene terephthalate) copolymers, poly(ethylene terephthalate) copolymers, and combinations thereof;
(b) from 20 to 50 weight percent of an amorphous polycarbonate having 250 ppm to 10000 ppm of Fries rearranged units;
(c) from 10 to 40 weight percent glass filler; and
(d) optionally from 0.1 to 5 weight percent of an antioxidant, mold release agent, colorant, stabilizer, or a combination thereof, wherein the melt blended composition has a polycarbonate aryl hydroxy end-group content of greater than 350 ppm; and wherein the composition, when molded into an article having a 2.0 mm thickness, provides a near infrared transmission at 960 nanometers of greater than 50 percent and a Vicat softening temperature of at least 120°C.

In particular, an article having a 2.0 mm thickness and molded from the composition has a near infrared transmission at 960 nanometers of greater than 50, specifically greater than 55 percent.

In another embodiment, articles comprising the above compositions are disclosed herein.

A process is also disclosed for welding a laser-transmissive first part to a laser-absorbing second part of an article to be welded, wherein the first part comprises a composition as described above and the second part comprises a thermoplastic article comprising an NIR-absorbing agent, and wherein at least a portion of the surface of the first part is placed in physical contact with at least a portion of a surface of the second part, the process further comprising applying NIR-laser (electromagnetic) radiation to the first part such that radiation passes through the first part and is absorbed by the second part so that sufficient heat is generated to effectively weld the first part to the second part of the article.

Further disclosed is a laser welded, molded article comprising a first part comprising a first laser-transmissive part welded to a second laser-absorbing part, wherein the first part comprises a product as described above and a laser welded bond between the first (upper) part and the second (lower) part.

The above described and other features and advantages will become more apparent by reference to the following figures and detailed description.

### BRIEF DESCRIPTION OF DRAWING

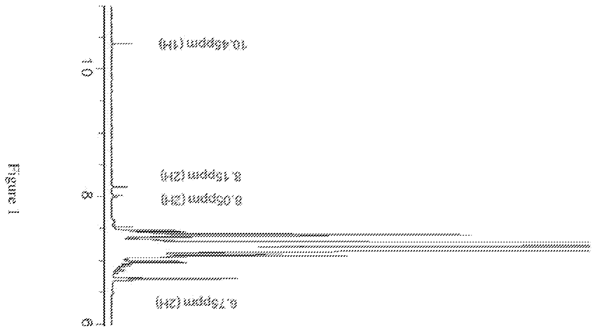

Figure 1 shows a proton nuclear magnetic resonance (¹H NMR) spectrum of a polycarbonate (PC 172X) having a high content of Fries rearrangement and present in an example of a composition according to the present invention.

### DETAILED DESCRIPTION

Amorphous polymers such as polycarbonate are for the most part produced by one of two commercial processes. The interfacial polymerization process is the most widely used commercial processes for producing bisphenol A polycarbonate. The production of bisphenol A polycarbonate involves the condensation of an aromatic dihydroxy compound such as bisphenol A (BPA) with phosgene (COCl₂). A base, typically caustic, is used to scavenge the hydrochloric acid generated. The condensation is catalyzed with either or both tertiary amine and/or a phase-transfer catalyst. The condensation is done in a two-phase media such as methylene chloride/water. The molecular weight, and therefore the melt viscosity of the resulting polymer, is controlled by the addition of a predetermined amount of chain stopper. Typically, monophenols such as phenol, p-cumylphenol, p-tert-butylphenol, and octylphenol have been used. The overall reaction is shown below in Equation (I): 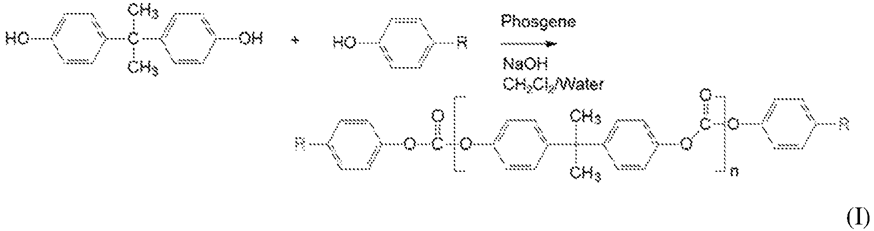 R, for example, is a C₃-C₈ alkyl group.

The other approach, the so-called melt polymerization (melt transesterification) process, is a solventless, thermal process. In the melt transesterification process for the preparation of bisphenol A polycarbonate, for example, an aromatic dihydroxy compound such as BPA is condensed with a diaryl carbonate such as diphenyl carbonate at elevated temperature and reduced pressure. The reaction is base catalyzed and is driven to high molecular weight by the removal of phenol under reduced pressure. The molecular weight of the resin is controlled by the amount of phenol that is removed. One of the major differences between melt prepared and interfacially prepared polycarbonate is that the melt prepared polycarbonate is typically not completely end-capped and some level of phenol-terminated polymer will usually be present. The melt process can be represented by Equation (II):

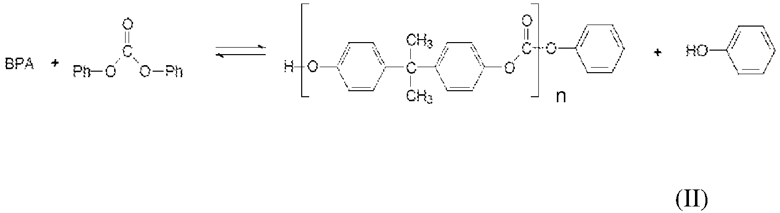

It is known that alkali metal compounds and alkaline earth compounds, when used as catalysts added to the monomer stage of the melt process, will not only generate the desired polycarbonate compound, but also other products via a rearrangement reaction known as the "Fries" rearrangement. The production of polycarbonates with a high degree "Fries" rearrangement has been described in the prior art US6504002. The rearranged polycarbonate compositions can be a mixture of linear, branched or extended Fries products.

Surprisingly, it has been found that the combination of crystalline or partially crystalline (semi-crystalline) polymers with certain amorphous polymers containing an aryl hydroxyl end-group content of greater than 300 ppm, in particular greater than 350 ppm, and more particularly greater than 500 ppm and/or a total Fries re-arranged unit content of greater than 150 ppm, in particular greater than 250 ppm, and more particularly greater than 300 ppm dramatically improves the near infra-red transparency (wavelengths of 800-1500 nm) of the polymer blend compared with those compositions in which an amorphous polymer produced by the interfacial process that has no more than 200 ppm of aryl hydroxyl end group content and no more than 150 ppm of total Fries rearranged units.

The compositions of the present invention advantageously provides increased transparency to NIR-laser light in molded, laser-transmitting parts for laser welding into articles, as compared to partially crystalline polymers alone, or polymer blends of partially crystalline with amorphous polymers having an aryl hydroxyl end-group content of lower than 300 ppm, in particular lower than 350 ppm, and more particularly lower than 500 ppm and /or a total Fries rearranged unit content of not more than 100 ppm, in particular not more than 150 ppm and more particularly no more than 250 ppm.

Accordingly, compositions of the present invention can unexpectedly facilitate the laser welding of articles at desirable weld speeds. Moreover, the present compositions can achieve high weld strength of welded articles without significantly sacrificing or impairing the desired physical properties of the articles. Furthermore, the weldable composition can contain substantial amounts of glass fiber or other filler. In particular, the disclosed compositions can exhibit high NIR transparency and good thermal properties, as measured at a near infrared transmission of 960 nanometers. A NIR laser-light transmission of greater than 45 percent and more specifically greater than 50 percent and a Vicat softening temperature of at least 120°C can be obtained.

Compounds or polymers are described herein using standard nomenclature. The singular forms "a," "an," and "the" include plural referents unless the context clearly dictates otherwise. All references are incorporated herein by reference. The term "combination thereof' means that one or more of the listed components is present, optionally together with one or more like components not listed. Various numerical ranges are disclosed in this patent application. Because these ranges are continuous, they include every value between the minimum and maximum values. Unless expressly indicated otherwise, the various numerical ranges specified in this application are approximations. The endpoints of all ranges reciting the same characteristic or component are independently combinable and inclusive of the recited endpoint.

As used herein, the term "melt polycarbonate" refers to a polycarbonate made by the transesterification of a diaryl carbonate with a dihydroxy aromatic compound.

"BPA" is herein defined as bisphenol A or 2,2-bis(4-hydroxyphenyl)propane.

As used herein the term "Fries rearrangement" refers to a branched structural unit of the product polycarbonate bearing an aryl carbonyl group adjacent to a hydroxyl, a carbonate, or an ether unit on the same aryl ring. The term "Fries product" refers to polymers having Fries rearranged units. Likewise, the terms "Fries reaction" and "Fries rearrangement" are used interchangeably herein.

The polycarbonates used in the present invention contain a relatively high level of aryl hydroxyl content, which is detectable when the polycarbonate is subjected to a 1H NMR analysis. The aryl hydroxyl content is greater than 300 ppm, in particular greater than 350 ppm, and more particularly greater than 500 ppm.

The polycarbonates used in the present invention contain relatively high levels of Fries rearrangement, which is detectable when the polycarbonate is subjected to a Fries product analysis. The content of the various Fries components in polycarbonates can be determined by NMR. NMR peaks corresponding to branched Fries structure, linear Fries structure, and acid Fries structure can be integrated to obtain the total Fries content. Quantification of Fries rearrangement content and the polycarbonate aryl hydroxy end-group content can be obtained based on the integral of the 1H NMR signal of the Fries components to the integral of the eight polycarbonate protons, as specifically described in the examples.

Alternatively, the Fries content can be measured by KOH methanolysis of a resin and can be reported as parts per million (ppm) as follows. First, 0.50 grams of polycarbonate is dissolved in 4.0 ml of THF (containing p-terphenyl as internal standard). Next, 3.0 mL of 18% KOH in methanol is added to this solution. The resulting mixture is stirred for two hours at room temperature. Next, 1.0 mL of acetic acid is added, and the mixture is stirred for 5 minutes. Potassium acetate by-product is allowed to crystallize over 1 hour. The solid is filtered off and the resulting filtrate is analyzed by high performance liquid chromatography (HPLC) using p-terphenyl as the internal standard.

Polycarbonates produced by a melt process or activated carbonate melt process such of those listed in U.S. Pat. Nos. 5,151,491 and 5,142,018 typically contain a significant concentration of Fries product. In the past, Fries rearrangement in a product has been considered undesirable, because it is believed that the generation of significant Fries rearrangement in a product can lead to polymer branching, resulting in relatively poor or uncontrollable melt behavior. In the present invention, however, the occurrence of such Fries arrangement has been found to be unexpectedly desirable.

Without wishing to be bound by theory, the Fries rearrangement is believed to effect the rate of crystallization of the composition, the slowing down of which may arise from improved miscibility or slowed de-mixing of partially crystalline component polymer with the amorphous component polymer which, in turn, reduces the scattering effect of the partially crystalline polymer.

As set forth above, the present composition can comprise from 10 to 70 wt.%, specifically at least 15 wt.%, more specifically 20 to 60 wt.% or 25 to 50 wt.%, most specifically 30 to 40 wt.% of a partially crystalline thermoplastic polyester component. The polyester component can comprise poly(butylene terephthalate), poly(ethylene terephthalate), poly(butylene terephthalate) copolymers, poly(ethylene terephthalate) copolymers, and combinations thereof. As used herein, a "partially crystalline" polymer characteristically comprises crystalline domains, in comparison to amorphous polymers.

The poly(butylene terephthalate), poly(ethylene terephthalate), poly(butylene terephthalate) copolymers, and poly(ethylene terephthalate) copolymers comprise repeating units of formula (1): 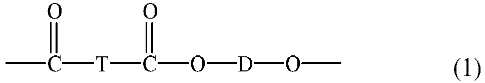 wherein T is a residue derived from a terephthalic acid or chemical equivalent thereof, and D is a residue derived from a diol such as ethylene glycol, butylene diol, specifically 1,4-butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of diols include esters, for example, dialkylesters.

In addition to units derived from a terephthalic acid or chemical equivalent thereof, and ethylene glycol or butylene diol, specifically 1,4-butane diol, or chemical equivalent thereof, other T and/or D units can be present in the polyester, provided that the type or amount of such units do not significantly adversely affect the desired properties of the thermoplastic compositions. Specifically the alternative T and D units are present in an amount of not more than 30 mole%, specifically less than 20 mole%, more specifically less than 10 mole%, most specifically less than 5 mole% or repeat units.

Examples of alternative aromatic dicarboxylic acids include 1,4-naphthalenedicarboxylic acid, 1,5-naphthalenedicarboxylic acid, 2,6-naphthalenedicarboxylic acid, and combinations comprising at least one of the foregoing dicarboxylic acids. Exemplary cycloaliphatic dicarboxylic acids include norbornene dicarboxylic acids, 1,4-cyclohexanedicarboxylic acids, and the like. In a specific embodiment, T is derived from a combination of terephthalic acid and isophthalic acid wherein the weight ratio of terephthalic acid to isophthalic acid is 99:1 to 10:90, specifically 55:1 to 50:50.

Examples of alternative diols can include C₆₋₁₂ aromatic diols, for example, not limited to, resorcinol, hydroquinone, and pyrocatechol, as well as diols such as 1,5-naphthalene diol, 2,6-naphthalene diol, 1,4-naphthalene diol, 4,4'-dihydroxybiphenyl, bis(4-hydroxyphenyl)ether, bis(4-hydroxyphenyl)sulfone, and the like, and combinations comprising at least one of the foregoing aromatic diols.

Exemplary alternative C₂₋₁₂ aliphatic diols include, but are not limited to, straight chain, branched, or cycloaliphatic alkane diols such as propylene glycol, i.e., 1, 2-and 1,3-propylene glycol, 2,2-dimethyl-1,3-propane diol, 2-ethyl-2-methyl-1,3-propane diol, 2,2,4,4-tetramethyl-cyclobutane diol, 1,3- and 1,5-pentane diol, dipropylene glycol, 2-methyl-1,5-pentane diol, 1,6-hexane diol, dimethanol decalin, dimethanol bicyclooctane, 1,4-cyclohexane dimethanol, including its cis- and trans-isomers, triethylene glycol, 1,10-decanediol; and combinations comprising at least of the foregoing diols.

The partially crystalline polyesters can have an intrinsic viscosity, as determined in phenol tetrachlorethane at 25°C, of 0.3 to 2 deciliters per gram, specifically 0.45 to 1.2 deciliters per gram. The polyesters can have a weight average molecular weight of 10,000 to 200,000 Daltons, specifically 20,000 to 150,000 Daltons as measured by gel permeation chromatography. In addition to the partially crystalline polyester component, the composition further comprises from 10 to 60 wt.%, specifically from greater than 15 to 55 wt.%, more specifically 20 to 50 wt.%, most specifically 25 to 45 wt.% of an amorphous thermoplastic polycarbonate that can be prepared by melt polymerization. The aryl hydroxyl end-group content of the amorphous thermoplastic polycarbonate is greater than 300 ppm, in particular greater than 350 ppm and more particularly greater than 500 ppm and/or a total Fries re-arranged unit content of greater than 100 ppm, in particular greater than 150 ppm and more particularly greater than 200 ppm.

In one embodiment, the weight ratio of partially crystalline to amorphous polycarbonate is 90:10 to 30:70, specifically 80:20 to 40:60, more specifically 70:30 to 50:50. The polycarbonate has a total Fries rearranged unit content of greater than 100 ppm, in particular greater than 150 ppm, more particularly greater than 250 ppm, and most particularly greater than 300 ppm, and/or an aryl hydroxyl end-group content of greater than 300 ppm, in particular greater than 350 ppm and more particularly greater than 500 ppm.

Polycarbonates comprise repeating structural carbonate units of formula (2): 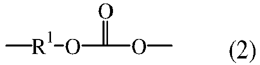 in which at least 60 percent of the total number of R¹ groups contain aromatic organic groups and the balance thereof are aliphatic, alicyclic, or aromatic groups. In an embodiment, each R¹ is a C₆₋₃₀ aromatic group, that is, contains at least one aromatic moiety. R¹ can be derived from a dihydroxy compound of the formula HO-R¹-OH, in particular a dihydroxy compound of formula (3):

HO-A¹-Y¹-A²-OH (3)

wherein each of A¹ and A² is a monocyclic divalent aromatic group and Y¹ is a single bond or a bridging group having one or more atoms that separate A¹ from A². In an exemplary embodiment, one atom separates A¹ from A². Specifically, each R¹ can be derived from a dihydroxy aromatic compound of formula (4) 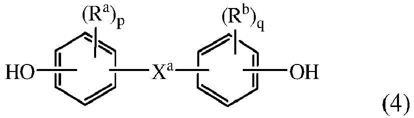 wherein R^{a} and R^{b} each represent a halogen or C₁₋₁₂ alkyl group and can be the same or different; and p and q are each independently integers of 0 to 4. Also in formula (4), X^{a} represents a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic bridging group can be disposed such that the C₆ arylene groups connected thereto are each connected to a common alkylidene carbon or to different carbons of the C₁₋₁₈ organic bridging group. In one embodiment, p and q is each 1, and R^{a} and R^{b} are each a C₁₋₃ alkyl group, specifically methyl, disposed meta to the hydroxy group on each arylene group.

In one embodiment, X^{a} is a substituted or unsubstituted C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

Other useful aromatic dihydroxy compounds that can be present in relatively minor amounts are of the formula HO-R¹-OH and include compounds of formula (5) 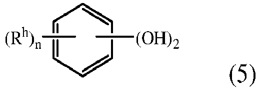 herein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it can contain heteroatoms in addition to carbon and hydrogen.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of A¹ and A² is p-phenylene and Y¹ is isopropylidene in formula (3).

The polycarbonates can have a weight average molecular weight of 10,000 to 200,000 Daltons, specifically 20,000 to 150,000 Daltons as measured by gel permeation chromatography (GPC), using a cross-linked styrene-divinylbenzene column and calibrated to polycarbonate references. GPC samples are prepared at a concentration of 1 mg/ml, and are eluted at a flow rate of 1.5 ml/min.

As discussed above, polycarbonates can be manufactured by either an interfacial process of polymerization or a melt process polymerization as is known in the art with appropriate adjustment, as discussed below, to obtain the desired Fries rearrangement. A higher Fries content is more characteristic of melt process polymerization. Compared to interfacial polymerization, the melt process obviates the need for phosgene during polymerization or a solvent such as methylene chloride. The melt process, however, requires high temperatures and relatively long reaction times. The melt process can also involve the use of complex processing equipment capable of operation at high temperature and low pressure, capable of efficient agitation of the highly viscous polymer melt during the relatively long reaction times required to achieve the desired molecular weight. Specifically, the melt process involves a polycondensation reaction of an aromatic dihydroxy compound with a carbonic diester, which can be carried out under conditions conventionally known and commonly employed. In a conventional method, a first stage reaction of the aromatic dihydroxy compound with carbonic diester (for example, diphenyl carbonate) can be carried out under ordinary pressure at a temperature of 80 to 250°C, specifically 100 to 230°C, more specifically 120 to 190°C, for 0.1 to 5 hours, specifically 0.25 to 4 hours, for example. Subsequently, the system can be evacuated and the reaction temperature elevated to carry out the reaction of the aromatic dihydroxy compound with carbonic diester at reduced pressure of less than 1 mm Hg at a temperature of 240 to 320°C.

During preparation of the polycarbonate, the Fries rearrangement denotes the presence of a repeating unit in a polycarbonate having the following formula: 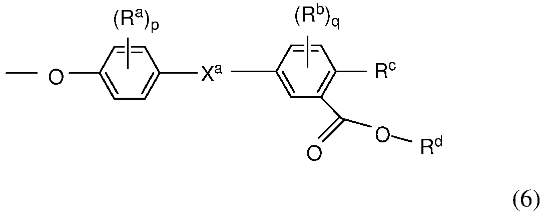 Wherein R^{a}, R^{b}, p, q, and X^{a} are defined as above. R^{c} can be a hydroxyl group or a carbonate or ether. A polymer chain can form via the carbonate or ether group. The R^{d} can be hydrogen or a substituted aryl group. A polymer chain can form via the substituted aryl group. For example, the following rearrangements (linear Fries, branched/ether Fries, and acid Fries) can occur:

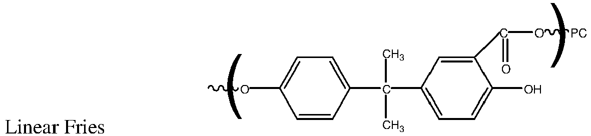

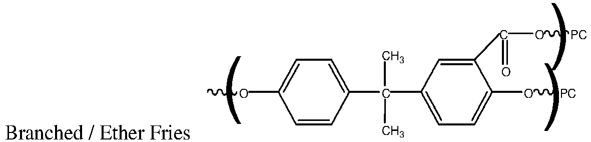

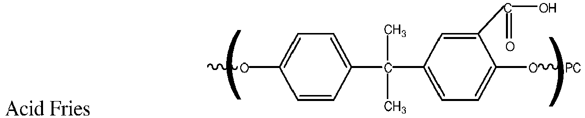

The total amount of branched Fries rearrangement can be adjusted during melt polymerization by varying the temperatures and/or reaction times. This is because byproducts formed at high temperature include Fries rearrangement of carbonate units along the growing polymer chains. The Fries rearrangement of carbonate units along the growing polymer chains can also be measured to ensure that the process adjustments provide the desired amount of Fries rearrangement. A Fries arranged polycarbonate or polyestercarbonate copolymer having a specified amount of Fries rearrangement, as analytically determined, is also commercially available from various suppliers, including SABIC Innovative Plastics under the LEXAN^{™} trademark in various resin grades according to additives present, melt flow or other properties, and ratings.

The present composition can further optionally comprise other amorphous polycarbonates which are not restricted to polymers produced by melt transesterification and can include linear or branched polycarbonate homo-polymers, copolymers, and polyestercarbonate copolymers for example.

The thermoplastic compositions further comprise a filler in an amount from 5 to 50, specifically 10 to 40 wt.% of the total weight of the composition. Such fillers include fibrous reinforcing materials, for example, inorganic fibers (e.g., glass, silica, alumina, silicaalumina, aluminum silicate, zirconia, silicon carbide, or the like), inorganic whiskers (e.g., silicon carbide, alumina, or the like), organic fibers (e.g., aliphatic or aromatic polyamide, aromatic polyester, fluorine-containing resins, acrylic resin such as a polyacrylonitrile, rayon or the like), plate-like reinforcing materials (e.g., talc, mica, glass, , and the like), particulate reinforcing materials (e.g., glass beads, glass powder, milled fiber (e.g., a milled glass fiber), or, which can be in the form of a plate, column, or fiber. The average diameter of the fibrous reinforcing material (as introduced into a blend) can be, for example, 1 to 50 micrometers, specifically 3 to 30 micrometers (µm), more specifically 8 to 15 micrometers and the average length of the fibrous reinforcing material can be, for example, 100 micrometers to 15 millimeters (mm), specifically 1mm to 10 mm, and more specifically 2mm to 5mm. Moreover, the average particle size of the plate-like or particulate reinforcing material may be, for example, 0.1 to 100 micrometers and specifically 0.1 to 50 micrometers (e.g., 0.1 to 10 micrometers).

In a specific embodiment, the reinforcing filler is a glass or glassy filler, specifically a glass fiber, a glass flake, and a glass bead, talc, or mica. In particular, the reinforcing filler is glass fibers, particularly, a chopped strand product. In one embodiment, the glass fiber has an average diameter of 2 to 12 mm in length and 8 to 15 micrometer in diameter. The glass fiber can be coated with a silane, epoxy silane, or other surface-treating agent (solid loss on Ignition of 0.1- 2.5 %).

In the final composition, because of breakage of the glass fibers during mixing and melt blending, the average length for chopped glass fibers can be about 0.1 to 10 mm, specifically, 2 to 5 mm.

The thermoplastic composition can include various other additives ordinarily incorporated with compositions of this type, with the proviso that the additives are selected so as not to significantly adversely affect the desired properties of the composition. Combinations of additives can be used. Exemplary additives include an antioxidant, thermal stabilizer, light stabilizer, ultraviolet light absorbing additive, quencher, plasticizer, mold release agent, antistatic agent, radiation stabilizer, mold release agent, or a combination thereof. Each of the foregoing additives, when present, is used in amounts typical for thermoplastic blends, for example, 0.01 to 15 weight percent (wt.%) of the total weight of the blend, specifically 0.1 to 10 wt.% of the total weight of the blend, based on the total weight of the composition, and fillers.

In one embodiment, the composition comprises from 0.01 to 5 wt.% of a combination of an antioxidant, mold release agent, colorant, and/or stabilizer, based on the total weight of the composition.

Exemplary antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearyl thiopropionate, dilauryl thiopropionate, ditridecyl thiodipropionate, octadecyl 3-(3,5-di-tert-butyl-4-hydroxyphenyl)propionate, pentaerythrityl tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants can be used in amounts of 0.0001 to 1 wt.%, based on the total weight of the composition.

Exemplary heat stabilizer additives include, for example, organophosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 wt.%, based on the total weight of the composition.

Mold release agents include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate, the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; combinations of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 wt.%, specifically 0.01 to 0.75 wt.%, and more specifically 0.1 to 0.5 wt.%, based on the total weight of the composition.

Optionally, the composition of the present invention further includes a colorant, specifically either one or more colorants that do not absorb substantially in the NIR (800 to 1500 nm) and from which a colored laser transmitting article can be molded. The composition of the present invention can optionally be used for the laser-absorbing part except that one or more laser absorbing colorants, for example, carbon black, organic compounds such as perylenes, or nanoscaled inorganic compounds such as metal oxides, mixed metal oxides or metal-borides can be added.

Suitable examples of laser transparent colored compositions including black can be manufactured through a selection and combination of colorants generally available in the art including but not limited to anthraquinone, perinone, quinoline, perylene, methane, coumarin, phthalimide, isoindoline, quinacridone, azomethine dyes, and combinations comprising one or more of the aforesaid dye classes.

The composition can have a Vicat softening temperature of at least 120°C, more specifically about 130 to 200°C, most specifically 140°C to 180°C according to ISO 306 at 120°C/hour and 50 N load.

The present composition can also be characterized as providing an article having any one or more or all of the following properties with respect to NIR laser light transmission. An article having a 2.0 mm thickness and molded (at a mold temperatures of 70°C) from the composition can have a near infrared transmission at 960 nanometers of greater than 48 percent, specifically greater than 52 percent to 85 percent, more specifically at least 55 percent. An article having a 2.0 mm thickness and molded (averaged transmission at mold temperatures between 70°C and at 90°C) from the composition can have a near infrared transmission at 960 nanometers of greater than 45 percent, specifically greater than 48 to 85 percent, more specifically at least 50 percent, most specifically at least 55 percent. An article having a 2.0 mm thickness and molded (at a mold temperatures of 70°C) from the composition can have a near infrared transmission at 1065 nanometers of greater than 50 percent, specifically greater than 52 to 85 percent, more specifically at least 55 percent.

An article having a 2.0 mm thickness and molded (averaged transmission at mold temperatures between 70°C and 90°C) from the composition has a near infrared transmission at 960 nanometers, of at least 5%, specifically at least 10%, more specifically at least 15% greater than the same composition with the polycarbonate replaced by a comparable polycarbonate having a total Fries rearrangement of less than 150 ppm.

In a specific embodiment, a thermoplastic composition comprises a product of melt blending a combination of:
(a) from more than 20 to 60 wt.% of a partially crystalline polyester component selected from crystalline poly(butylene terephthalate), poly(ethylene terephthalate), poly(butylene terephthalate) copolymers, poly(ethylene terephthalate) copolymers, and combinations thereof;
(b) from 20 to 50 wt.% of an amorphous polycarbonate having a Fries arrangement of 150 ppm to 10000 ppm;
(c) optionally from 0.1 to 5 wt.% of an antioxidant, mold release agent, colorant, stabilizer, or a combination thereof; wherein an article having a 2 mm thickness and molded from the composition has a near infrared transmission at 960 nanometers of greater than 45 percent, specifically greater than 50 percent, and more specifically greater than 55 percent.

The thermoplastic composition can be manufactured by methods generally available in the art. For example, one method of manufacturing a thermoplastic composition comprises melt blending the components of the composition. More particularly, the powdered thermoplastic polymer components and other optional additives (including stabilizer packages, e.g., antioxidants, heat stabilizers, mold release agents, and the like) are first blended, in a HENSCHEL-Mixer^{®} high speed mixer. Other low shear processes such as hand mixing can also accomplish this blending. The blend is then fed into the throat of an extruder via a hopper. Alternatively, one or more of the components can be incorporated into the composition by feeding directly into the extruder at the throat and/or downstream through a sidestuffer. Alternatively, any desired additives can also be compounded into a masterbatch, and combined with the remaining polymeric components at any point in the process. The extruder is generally operated at a temperature higher than that necessary to cause the composition to flow. The extrudate is immediately quenched in a water batch and pelletized. Such pellets can be used for subsequent molding, shaping, or forming. In specific embodiments, a method of manufacturing a thermoplastic composition comprises melting any of the above-described compositions to form the laser-weldable composition.

Shaped, formed, or molded articles comprising the compositions are also provided. In one embodiment, an article is formed by extruding, casting, blow molding, or injection molding a melt of the thermoplastic composition. The article can be in the form of a film or sheet.

In another aspect of the invention, parts can be assembled into an article by laser welding. A process for welding a first part comprising the above compositions to a second part comprises physically contacting at least a portion of a surface of the first part with at least a portion of a surface of the second part, applying NIR laser radiation to and through the first part, which provides improved transmission, wherein after the radiation passes through the first part, the radiation is absorbed by the thermoplastic composition of the second part and sufficient heat is generated to weld the first part to the second part, resulting in a welded article.

The second thermoplastic part of the article can comprise a wide variety of thermoplastic polymer compositions that have been rendered laser absorbing by means known to those of skill in the art including the use of additives and/or colorants such as but not limited to carbon black. Exemplary polymer compositions can include but are not limited to, olefinic polymers, including polyethylene and its copolymers and terpolymers, polybutylene and its copolymers and terpolymers, polypropylene and its copolymers and terpolymers; alpha-olefin polymers, including linear or substantially linear interpolymers of ethylene and at least one alpha-olefin and atactic poly(alpha-olefins); rubbery block copolymers; polyamides; polyimides; polyesters such as poly(arylates), poly(ethylene terephthalate) and poly(butylene terephthalate); vinylic polymers such as polyvinyl chloride and polyvinyl esters such as polyvinyl acetate; acrylic homopolymers, copolymers and terpolymers; epoxies; polycarbonates, polyester-polycarbonates; polystyrene; poly(arylene ethers), including poly(phenylene ether); polyurethanes; phenoxy resins; polysulfones; polyethers; acetal resins; polyoxyethylenes; and combinations thereof. More particularly, the polymers are selected from the group consisting of polyethylene, ethylene copolymers, polypropylene, propylene copolymers, polyesters, polycarbonates, polyester-polycarbonates, polyamides, poly(arylene ether)s, and combinations thereof. In a specific embodiment, the second article comprises an olefinic polymer, polyamide, polyimide, polystyrene, polyarylene ether, polyurethane, phenoxy resin, polysulfone, polyether, acetal resin, polyester, vinylic polymer, acrylic, epoxy, polycarbonate, polyester-polycarbonate, styrene-acrylonitrile copolymers, or a combinations thereof. More specifically, the second article comprises a polycarbonate homopolymer or copolymer, polyester homopolymer or copolymer, e.g., a poly(carbonate-ester) and combinations thereof.

In one embodiment the second part of the article comprises a glass-filled crystalline or partially crystalline composition that has been rendered laser absorbing. Compositions and methods for rendering such composition laser absorbing are known to those of skill in the art.

In one embodiment, the second part comprises a glass-filled combination of a partially crystalline composition and an amorphous thermoplastic poly(ester) copolymer, poly(ester-carbonate), or combination thereof that has been rendered laser absorbing.

The thermoplastic composition of the laser- absorbing second part of the article can further comprise an effective amount of a near-infrared absorbing material (a material absorbing radiation wavelengths from 800 to 1400 nanometers) that is also not highly absorbing to visible light (radiation wavelengths from 350 nanometers to 800 nanometers). In particular the near-infrared absorbing material can be selected from organic dyes including polycyclic organic compounds such as perylenes, nanoscaled compounds, metal complexes including metal oxides, mixed metal oxides, complex oxides, metal-sulfides, metal-borides, metal-phosphates, metal-carbonates, metal-sulfates, metal-nitrides, lanthanum hexaboride, cesium tungsten oxide, indium tin oxide, antimony tin oxide, indium zinc oxide, and combinations thereof. In one embodiment, the near-infrared material has an average particle size of 1 to 200 nanometers. Depending on the particular NIR absorbing material used, the NIR absorbing material can be present in the thermoplastic composition of the second article in an amount from 0.00001 to 5 wt.% of the composition. Effective amounts for NIR absorption in welding are readily determined by one of ordinary skill in the art without undue experimentation. Lanthanum hexaboride and cesium tungsten oxide, for example, can be present in the composition in an amount from 0.00001 to 1 wt.%, still more specifically 0.00005 to 0.1 wt.%, and most specifically 0.0001 to 0.01 wt.%, based on total weight of the laser-weldable composition for the absorbing part of the article to be welded.

Also disclosed are laser-welded articles comprising the inventive thermoplastic compositions as described above in a first component, laser-welded to a second component comprising a second thermoplastic composition as described above.

The invention includes at least the following embodiments.

The compositions and methods are further illustrated by the following Examples, which do not limit claims. Unless indicated otherwise molecular weights are weight average molecular weights.

### EXAMPLES

### MATERIALS

The materials shown in Table 1 were used in the Examples below.

**Table 1**

| COMPONENT | CHEMICAL DESCRIPTION | SOURCE |
|---|---|---|
| PBT 195 | Poly(1,4-butylene terephthalate), (M_{w} = 66,000 g/mol, using polystyrene standards) | SABIC Innovative Plastics |
| PBT 315 | Poly(1,4-butylene terephthalate), (M_{w} = 115,000 g/mol, using polystyrene standards) | SABIC Innovative Plastics |
| PC 175 | Bisphenol A polycarbonate homopolymer (M_{w} = 22,000 g/mol), prepared by interfacial process, amorphous. The amount of Fries rearrangement is under 100 ppm. | LEXAN^{™}, SABIC Innovative Plastics |
| PC 172L | Bisphenol A polycarbonate homopolymer (M_{w} = 23,000 g/mol), prepared by melt process, amorphous. The amount of Fries rearrangement is over 150 ppm (about 350 ppm). | LEXAN^{™}, SABIC Innovative Plastics |
| PC 172X | S1220-62, a bisphenol A polycarbonate homopolymer (M_{w} = 23,000 g/mol), prepared by melt process, amorphous. The amount of Fries arrangement is high (about 5400 ppm). | LEXAN^{™}, SABIC Innovative Plastics |
| PC 198 | THPE-branched polycarbonate. (M_{w} = 34,000 g/mol). The amount of Fries rearrangement is under 100 ppm. THPE is 1,1,1-Tris(4-hydroxyphenyl)ethane. | LEXAN^{™}, SABIC Innovative Plastics |
| AO1010 | Pentaerythritol tetrakis(3,5-di-tert-butyl-4-hydroxyhydrocinnamate) | IRGANOX^{™} 1010, Ciba Specialty Chemicals |
| Glass fiber | SiO₂ - fibrous glass (10 mm length, 13 micrometer diameter) | Nippon Electric Glass T120 |
| MZP | Monozinc phosphate-2-hydrate | Chemische Fabriek |
| PETS | Pentaerythritol tetrastearate | Lonza, Inc. |

Polycarbonate molecular weights are based on GPC measurements using a polystyrene standard and calibrated and expressed in polycarbonate units.

### Test Methods

The samples are prepared in deuterated chloroform 99% grade, containing 0.03 %TMS as internal standard for chemical shift calibration. Approximately 100 mg of the sample is weighed into a sample vial and 0.8 ml CDCl₃ is added. The following instrument settings were used:

**Table 2**

| NMR Variable | Setting |
|---|---|
| Frequency | 300MHz or 400 MHz |
| Pulse width | 90° |
| Time domain size | 32K data points |
| Recycle delay | 8 sec |
| Sweep width | 15 ppm (6000 Hz for 400 MHz) |
| Center of the spectral window | 6 ppm (transmitter frequency) |
| Number of scans | 256 |
| rf pulse sequence | appropriate pulse sequence with a single pulse and acquisition |
| Sample spinning speed | 20 Hz |
| Receiver gain | Automatic receiver gain adjustment. In case of excessive tailing near the huge polycarbonate signals, the receiver gain can be reduced by a factor of two. |

Quantification of Fries rearrangement content and polycarbonate aryl hydroxy end-group content can be measured by relating the integral of the 1H NMR signal of the Fries components to the integral of the eight polycarbonate protons. Specifically, approximately 100mg of the resin or blended material was added to 0.8 mL of CDCl₃, deuterated chloroform, 99% grade, containing 0.03 % tetra methyl silane (TMS) as internal standard for chemical shift calibration. In the case of extruded blend material the sample was shaken for 48 to 72 hours. The data was acquired on a 400 MHz NMR from 256 scans. Standard manipulations of the free induced decay signal by Fourier transformation, phase and baseline correction were carried out to obtain the spectrum with TMS as internal standard for chemical shift calibration. Specifically, the integrals of the signals at 10.45 ppm (one proton), 8.15 ppm (two protons) and 8.05 ppm (two proton) were proportioned to the integral of the eight polycarbonate protons between 6.4 to 7.5 ppm and used to calculate the total Fries content. The signal at 6.7 ppm (two protons) was proportioned to the integral of the eight polycarbonate protons between 6.8 ppm to 7.5 ppm and used to calculate the polycarbonatehydroxyl content. Using this NMR measurement, Figure 1 shows a 1H NMR spectrum of PC 172X polycarbonate.]

Poly(butylene terephthalate) ("PBT") and polycarbonate ("PC") were melt blended in the presence of processing aids, glass fibers and acid quenchers in an extruder. Molten polymer strands were cooled in a water bath and pelletized after which 60 mm x 60 mm plaques of two different thickness (1.6 and 2.0 mm, respectively) were molded.

The near infrared (NIR) percentage transmission data was measured on 1.6 mm and 2 mm thick parts molded at 70°C and 90° and collected on a Perkin-Elmer Lambda^{®} 950 spectrophotometer at 960 nm and 1065 nm. Two measurements were taken per molded part, one measurement at the base of the part and one measurement close to the gate and the average reported. Vicat softening temperature, heat deflection temperature, and MVR were also determined on molded samples and pellets, respectively, in accordance with ISO methods, as follows.

**Table 3**

| Test | Description |
|---|---|
| Melt Volume Rate (MVR) | Melt Volume Rate (MVR) was determined at 250°C using a 2.16 kilogram weight, at 5 and 15 minutes, respectively, over 10 minutes in accordance with ISO 1133. |
| Vicat Softening Temperature | Vicat Softening temperature was measured according to ISO 306 at 120°C/hour and 50 N load. |
| Heat Deflection Temperature (HDT) | HDT was measured at 0.45 MPa or 1.8 MPa on the flat side of a 4-mm thick bar according to ISO 75Af. |

Table 4 shows various PC/PBT blends in combination with 20% glass fibers. Specifically, the compositions of Comparative Examples 1 and 2 contained a polycarbonate having relatively low Fries rearrangement, prepared by interfacial polymerization (PC 175).

**Table 4**

| Item Description | | Unit | C.Ex. 1 | C.Ex.2 | Ex.1 | Ex.2 | Ex.3 |
|---|---|---|---|---|---|---|---|
| PC 172L | | % | - | 10 | 20 | 30 | 36.69 |
| PC 175 | | % | 36.99 | 26.69 | 19.69 | 9.69 | - |
| PBT 195, milled | | % | 40 | 40 | 40 | 40 | 40 |
| Mono zinc phosphate | | % | 0.05 | 0.05 | 0.05 | 0.05 | 0.05 |
| Glass fiber | | % | 20 | 20 | 20 | 20 | 20 |
| Antioxidant 1010 | | % | 0.06 | 0.06 | 0.06 | 0.06 | 0.06 |
| PETS (>90% esterified) | | % | 0.2 | 0.2 | 0.2 | 0.2 | 0.2 |
| Total | | | 100 | 100 | 100 | 100 | 100 |

| Property | | Thickness | | | | | |
|---|---|---|---|---|---|---|---|
| Transmission (molded at 70°C) at 960 nm | | 1.6 mm | 71 | 71 | 78 | 81 | 82 |
| Reflection (70°C) at 960 nm | | 1.6 mm | 15 | 18 | 12 | 11 | 10 |
| Transmission (molded at 90°C) at 960 nm | | 1.6 mm | 62 | 65 | 73 | 76 | 80 |
| Reflection (90°C) at 960 nm | | 1.6 mm | 23 | 23 | 16 | 14 | 12 |
| Average transmission at 960 nm | | 1.6 mm | 67 | 68 | 76 | 78 | 81 |
| Average transmission at 1065 nm | | 1.6 mm | --73 | 72 | 79 | 81 | 82 |
| Average reflection At 960 nm | | 1.6 mm | 19 | 20 | 14 | 12 | 11 |
| Transmission (molded at 70°C) at 960 nm | | 2 mm | 44 | 43 | 53 | 57 | 62 |
| Reflection (70°C) at 960 nm | | 2 mm | 39 | 42 | 33 | 27 | 21 |
| Transmission (molded at 90°C) at 960 nm | | 2 mm | 38 | 40 | 45 | 48 | 56 |
| Reflection (90°C) at 960 nm | | 2 mm | 46 | 46 | 41 | 38 | 27 |
| Average transmission at 960 nm | | 2 mm | 41 | 41 | 49 | 53 | 59 |
| Average transmission at 1065 nm | | 2 mm | --47 | 46 | 54 | 58 | 63 |
| Average reflection At 960 nm | | 2 mm | 42 | 44 | 37 | 32 | 24 |

| Property | | Unit | | | | | |
|---|---|---|---|---|---|---|---|
| Total Fries Rearrangement | | ppm | <100 | <100 | 161 | 198 | 222 |
| PC aryl OH end-group content | | ppm | 139 | 277 | 427 | 628 | 745 |
| HDT | 0.45 MPa | °C | 149 | 152 | 145 | 138 | 149 |
| | 1.8 MPa | °C | 114 | 113 | 107 | 106 | 107 |
| MVR | 2.16 kg/250°C 300 sec | - | 14 | 14 | 15 | 16 | 15 |
| | 2.16 kg/250°C 900 sec | - | 15 | 16 | 15 | 16 | 16 |
| Vicat | 50N/120°C/h | °C | 146 | 148 | 145 | 146 | 147 |

The experimental results in Table 4 illustrate that increasing the relative loading of high Fries polycarbonate (PC 172L), a polycarbonate having relatively higher Fries rearrangement (prepared by a melt polymerization method) while lowering the relative loading of the interfacial polycarbonate (PC 9175) increases the NIR transmission through molded parts having a 2 mm wall thickness. The increase was appreciable when the two are in a 1:1 ratio, with an increase over 15% when all the interfacial polycarbonate is replaced by melt polycarbonate having a total Fries content of greater than 150ppm. The MVR and Vicat temperature was not significantly affected by the use of the higher Fries polycarbonate, varying by only a point or two.

Table 5 shows PC/PBT blend combinations in the presence of 30% glass fibers. The compositions compare linear (C.Ex. 3) and branched polycarbonate (C.Ex. 4) having total Fries rearranged units less than 100 ppm with PC 172L polycarbonate and PC 172X, having total Fries rearranged units of 350 and 5400 ppm, respectively.

**Table 5**

| Item Description | Unit | C.Ex. 3 | C. x. 4 | Ex.4 | Ex. 5 |
|---|---|---|---|---|---|
| PBT 195, milled | % | 34.59 | 34.59 | 34.59 | 34.59 |
| PETS (>90% esterified) | % | 0.3 | 0.3 | 0.3 | 0.3 |
| Antioxidant 1010 | % | 0.06 | 0.06 | 0.06 | 0.06 |
| Mono zinc phosphate | % | 0.05 | 0.05 | 0.05 | 0.05 |
| Glass fiber | % | 30 | 30 | 30 | 30 |
| PC 175 | % | 35 | | | |
| PC 172L | % | | | 35 | |
| PC 172X | % | | | | 35 |
| PC 198 | % | | 35 | | |
| Total | % | 100 | 100 | 100 | 100 |

| Property \| | Thickness | | | | |
|---|---|---|---|---|---|
| Transmission at 960 nm (molded at 70°C) | 1.6 mm | 70.5 | 59.7 | 78.6 | 79.2 |
| Transmission at 1065 nm (molded at 70°C) | 1.6 mm | 73.5 | 64.1 | 79.8 | 80.1 |
| Reflection at 960 nm (molded at 70°C) | 1.6 mm | 17.8 | 64.1 | 11.1 | 10.5 |
| Transmission at 960 nm (molded at 70°C) | 2.0 mm | 42.3 | 41.2 | 62.7 | 79.0 |
| Transmission at 1065nm (molded at 70°C) | 2.0 mm | 46.6 | 45.4 | 67.8 | 80.4 |
| Reflection at 70°C) | 2.0 mm | 40.3 | 45.4 | 22.4 | 11.5 |

| Property | Unit | | | | |
|---|---|---|---|---|---|
| Total Fries | ppm | <100 | <100 | 190 | 3200 |
| PC-OH end-group content | ppm | 156 | 103 | 827 | 1036 |

Surprisingly the use of the branched polycarbonate PC 198 (obtained from the interfacial process) dramatically decreased the NIR transmission at 1.6 mm thick parts, while at 2 mm thickness the transmission values were similar to linear polycarbonate, PC 175. Both these polymers contain low Fries rearranged units and low aryl PC-OH end-group content. On the other hand, as with the 20% glass filled compositions, the addition of polycarbonate having the requisite Fries content, as produced by melt transesterification, increased the NIR transparency. The increase is augmented when PC 175 having a total Fries content of less than 100 ppm is replaced by PC 172X with a total Fries content of 5400 ppm.

## Claims

1. A composition made by a process comprising melt blending:
(a) from 10 to 70 weight percent of a partially crystalline polyester component selected from poly(butylene terephthalate), poly(ethylene terephthalate), poly(butylene terephthalate) copolymers, poly(ethylene terephthalate) copolymers, and combinations thereof;
(b) from 10 to 60 weight percent of an amorphous polycarbonate having greater than 150 to 10,000 ppm of Fries rearranged monomeric units;
(c) from 5 to 50 weight percent of a filler; and
(d) optionally, from 0.01 to 10 wt.% of an antioxidant, mold release agent, colorant, stabilizer, or a combination thereof;
wherein the melt blended composition has a polycarbonate aryl hydroxy end-group content of at least 300 ppm; and
wherein the composition, when molded into an article having a 2.0 mm thickness,
provides a near infrared transmission at 960 nanometers of greater than 45%, wherein the contents of Fries rearrangement monomeric unit and of polycarbonate aryl hydroxy end-groups, and the near infrared transmission are determined using the methods specified in the present description.

2. The composition of claim 1 wherein an article having a 2.0 mm thickness and molded from the composition has a near infrared transmission at 960 nanometers at least 5% greater than the same composition with the polycarbonate replaced by an comparable polycarbonate having less than 150 ppm of Fries rearranged monomeric units, the near infrared transmission and Fries rearrangement monomeric units being determined according to the methods specified in the present description.

3. The composition of claim 1 or 2 wherein the partially crystalline thermoplastic is poly(butylene terephthalate).

4. The composition of any of claims 1-3 wherein the amorphous polycarbonate comprises a bisphenol A polycarbonate.

5. The composition of any of claims 1-4 wherein the amorphous polycarbonate has at least 250 ppm of Fries rearranged monomeric units, determined using the method specified in the present description.

6. The composition of any of claims 1-5 wherein the polycarbonate is made by a process of melt polycondensation.

7. The composition of any of claims 1-6 wherein the filler is glass fiber.

8. The composition of claim 7 wherein the glass fiber introduced into the melt has an average diameter of 3 to 30 micrometers and an average length of 0.1 to 15 mm.

9. The composition of claim 1,
wherein the partially crystalline polyester component is used in an amount of from more than 20 to 60 weight percent;
wherein the amorphous polycarbonate has greater than 250 to 10,000 ppm of Fries rearranged monomeric units and is used in an amount of from 20 to 50 weight percent;
wherein the filler is a glass filler and is used in an amount of from 10 to 40 weight percent;
wherein the melt blended components optionally comprise from 0.1 to 5 weight percent of an antioxidant, mold release agent, colorant, stabilizer, or a combination thereof;
wherein the polycarbonate aryl hydroxy end-group content is at least 400 ppm; and
wherein an article having a 2.0 millimeter thickness and molded from the composition has a near infrared transmission at 960 nanometers of greater than 50 percent, and a Vicat softening temperature of at least 130°C according to ISO 306 at 120°C/hour and 50 N load, wherein the content of Fries rearrangement monomeric unit and the near infrared transmission are determined using the methods specified in the present description.

10. The composition of claim 9 wherein an article having a 2.0 mm thickness and molded from the composition has a near infrared transmission at 960 nanometers of greater than 55 percent, determined using the method specified in the present description.

11. The composition of claim 1,
wherein the partially crystalline polyester component is poly(butylene terephthalate) and is used in an amount of from more than 20 to 60 weight percent;
wherein the amorphous polycarbonate is an amorphous bisphenol A polycarbonate having greater than 300 to 10,000 ppm of Fries rearranged monomeric units and is used in an amount of from 20 to 50 weight percent;
wherein the filler is glass filler and is used in an amount of from 10 to 40 weight percent;
wherein the melt blended components comprise the antioxidant, mold release agent, colorant, stabilizer, or combination thereof in an amount of from 0.1 to 5 weight percent;
wherein the polycarbonate aryl hydroxy end-group content is at least 500 ppm; and
wherein the article having a 2.0 mm thickness and molded from the composition has a near infrared transmission at 960 nanometers of greater than 55 percent, and a Vicat softening temperature of 135°C to 190°C according to ISO 306 at 120°C/hour and 50 N load,
wherein the contents of Fries rearrangement monomeric unit and of polycarbonate aryl hydroxy end-groups, and the near infrared transmission are determined using the methods specified in the present description.

12. A process for welding a laser-transmissive first part to a laser-absorbing second part of an article, wherein the first part comprises the composition of claim 1 and the second part comprises a thermoplastic composition comprising an NIR-absorbing agent, and where at least a portion of a surface of the first part is placed in physical contact with at least a portion of a surface of the second part to form a welding join area, the process further comprising applying NIR-laser radiation to the first part such that the radiation substantially passes through the first part and is absorbed by the second part so that sufficient heat is generated to effectively weld the first part to the second part of the article.

13. The process of claim 12, wherein the second article comprises a polymer selected from the group consisting of polycarbonate, polyester, polycarbonate copolymers, polyester copolymers, and combinations thereof.

14. The process of claim 12 or 13, wherein the second article comprises a NIR absorbing material selected from the group consisting of organic dyes, metal oxides, mixed metal oxides, complex oxides, metal-sulfides, metal-borides, metal-phosphates, metal-carbonates, metal-sulfates, metal-nitrides, lanthanum hexaboride, cesium tungsten oxide, indium tin oxide, antimony tin oxide, indium zinc oxide, and combinations thereof, wherein the NIR absorbing material is present in the thermoplastic composition of the second part in an effective amount from 0.00001 to 5 wt.% , based on total weight of the laser-weldable composition.

15. A laser welded, molded article comprising a first laser-transmissive part welded to a second laser-absorbing part, wherein the first part comprises a product made by a process comprising melt blending:
(a) from 10 to 70 weight percent of a partially crystalline thermoplastic polyester component selected from poly(butylene terephthalate), poly(ethylene terephthalate), poly(butylene terephthalate) copolymers, poly(ethylene terephthalate) copolymers, and combinations thereof;
(b) from 10 to 60 weight percent of an amorphous polycarbonate having greater than 150 to 10,000 ppm of Fries rearranged monomeric units;
(c) from 5 to 50 weight percent of a filler; and
(d) optionally, from 0.01 to 10 wt.% of an antioxidant, mold release agent, colorant, stabilizer, or a combination thereof;
wherein the melt blended composition has a polycarbonate aryl hydroxy end-group content of at least 300 ppm; and wherein the composition, when molded into an article having a 2.0 mm thickness, provides a near infrared transmission at 960 nanometers of greater than 45%, wherein the contents of Fries rearrangement monomeric unit and of polycarbonate aryl hydroxy end-groups, and the near infrared transmission are determined using the methods specified in the present description.

## Patentansprüche

1. Zusammensetzung, die nach einem Verfahren hergestellt wird, das Schmelzmischen umfasst:
(a) 10 bis 70 Gewichtsprozent einer teilweise kristallinen Polyesterkomponente, ausgewählt aus Poly(butylenterephthalat), Poly(ethylenterephthalat), Poly(butylenterephthalat)-Copolymeren, Poly(ethylenterephthalat)-Copolymeren und Kombinationen davon;
(b) 10 bis 60 Gewichtsprozent eines amorphen Polycarbonats mit mehr als 150 bis 10.000 ppm an umgelagerten Fries-Monomereinheiten;
(c) 5 bis 50 Gewichtsprozent eines Füllstoffs; und
(d) optional 0,01 bis 10 Gew.-% eines Antioxidationsmittels, Formtrennmittels, Farbstoffs, Stabilisators oder einer Kombination davon;
wobei die schmelzgemischte Zusammensetzung einen Gehalt an Polycarbonat-Arylhydroxy-Endgruppen von mindestens 300 ppm aufweist; und
wobei die Zusammensetzung, wenn sie zu einem Gegenstand mit einer Dicke von 2,0 mm geformt wird, eine Transmission im nahen Infrarot bei 960 Nanometern von mehr als 45 % aufweist, wobei die Gehalte an Fries-Umlagerungsmonomereinheiten und an Polycarbonat-Arylhydroxy-Endgruppen sowie die Transmission im nahen Infrarot unter Verwendung der in der vorliegenden Beschreibung angegebenen Verfahren bestimmt werden.

2. Zusammensetzung nach Anspruch 1, wobei ein Gegenstand, der eine Dicke von 2,0 mm aufweist und aus der Zusammensetzung geformt ist, eine Transmission im nahen Infrarot bei 960 Nanometern aufweist, die mindestens 5 % größer ist als die gleiche Zusammensetzung, bei der das Polycarbonat durch ein vergleichbares Polycarbonat ersetzt ist, das weniger als 150 ppm an umgelagerten Fries-Monomereinheiten aufweist, wobei die Transmission im nahen Infrarot und die umgelagerten Fries-Monomereinheiten gemäß den in der vorliegenden Beschreibung angegebenen Verfahren bestimmt werden.

3. Zusammensetzung nach Anspruch 1 oder 2, wobei der teilkristalline Thermoplast Poly(butylenterephthalat) ist.

4. Zusammensetzung nach einem der Ansprüche 1 bis 3, wobei das amorphe Polycarbonat ein Bisphenol-A-Polycarbonat umfasst.

5. Zusammensetzung nach einem der Ansprüche 1 bis 4, wobei das amorphe Polycarbonat mindestens 250 ppm umgelagerte Fries-Monomereinheiten aufweist, die unter Verwendung des in der vorliegenden Beschreibung angegebenen Verfahrens bestimmt werden.

6. Zusammensetzung nach einem der Ansprüche 1 bis 5, wobei das Polycarbonat durch ein Verfahren der Schmelzpolykondensation hergestellt wird.

7. Zusammensetzung nach einem der Ansprüche 1 bis 6, wobei der Füllstoff eine Glasfaser ist.

8. Zusammensetzung nach Anspruch 7, wobei die in die Schmelze eingebrachte Glasfaser einen durchschnittlichen Durchmesser von 3 bis 30 Mikrometern und eine durchschnittliche Länge von 0,1 bis 15 mm aufweist.

9. Zusammensetzung nach Anspruch 1,
wobei die teilkristalline Polyesterkomponente in einer Menge von mehr als 20 bis 60 Gewichtsprozent verwendet wird;
wobei das amorphe Polycarbonat mehr als 250 bis 10.000 ppm an umgelagerten Fries-Monomereinheiten aufweist und in einer Menge von 20 bis 50 Gew.-% verwendet wird;
wobei der Füllstoff ein Glasfüllstoff ist und in einer Menge von 10 bis 40 Gewichtsprozent verwendet wird;
wobei die in der Schmelze gemischten Komponenten optional 0,1 bis 5 Gewichtsprozent eines Antioxidationsmittels, Formtrennmittels, Farbstoffs, Stabilisators oder einer Kombination davon umfassen;
wobei der Gehalt an Polycarbonat-Arylhydroxy-Endgruppen mindestens 400 ppm beträgt; und
wobei ein Gegenstand, der eine Dicke von 2,0 mm aufweist und aus der Zusammensetzung geformt ist, eine Transmission im nahen Infrarot bei 960 Nanometern von mehr als 50 % und eine Vicat-Erweichungstemperatur von mindestens 130 °C gemäß ISO 306 bei 120 °C/Stunde und 50 N Belastung aufweist, wobei der Gehalt an Fries-Umlagerungsmonomereinheiten und die Transmission im nahen Infrarot unter Verwendung der in der vorliegenden Beschreibung angegebenen Verfahren bestimmt werden.

10. Zusammensetzung nach Anspruch 9, wobei ein Gegenstand mit einer Dicke von 2,0 mm, der aus der Zusammensetzung geformt ist, eine Transmission im nahen Infrarot bei 960 Nanometer von mehr als 55 % aufweist, bestimmt nach dem in der vorliegenden Beschreibung angegebenen Verfahren.

11. Zusammensetzung nach Anspruch 1,
wobei die teilkristalline Polyesterkomponente Poly(butylenterephthalat) ist und in einer Menge von mehr als 20 bis 60 Gewichtsprozent verwendet wird;
wobei das amorphe Polycarbonat ein amorphes Bisphenol-A-Polycarbonat mit mehr als 300 bis 10.000 ppm an umgelagerten Fries-Monomereinheiten ist und in einer Menge von 20 bis 50 Gew.-% verwendet wird;
wobei der Füllstoff ein Glasfüllstoff ist und in einer Menge von 10 bis 40 Gewichtsprozent verwendet wird;
wobei die in der Schmelze gemischten Komponenten das Antioxidationsmittel, das Formtrennmittel, das Farbmittel, den Stabilisator oder eine Kombination davon in einer Menge von 0,1 bis 5 Gew.-% umfassen;
wobei der Gehalt an Polycarbonat-Arylhydroxy-Endgruppen mindestens 500 ppm beträgt; und wobei der Gegenstand, der eine Dicke von 2,0 mm aufweist und aus der Zusammensetzung geformt ist, eine Transmission im nahen Infrarot bei 960 Nanometern von mehr als 55 % und eine Vicat-Erweichungstemperatur von mindestens 135 °C bis 190 °C gemäß ISO 306 bei 120 °C/Stunde und 50 N Belastung aufweist,
wobei die Gehalte an Fries-Umlagerungsmonomereinheiten und an Polycarbonat-Arylhydroxy-Endgruppen sowie die Transmission im nahen Infrarot unter Verwendung der in der vorliegenden Beschreibung angegebenen Verfahren bestimmt werden.

12. Verfahren zum Verschweißen eines laserdurchlässigen ersten Teils mit einem laserabsorbierenden zweiten Teil eines Gegenstandes, wobei das erste Teil die Zusammensetzung nach Anspruch 1 und das zweite Teil eine thermoplastische Zusammensetzung mit einem NIR-absorbierenden Mittel umfasst, und wobei mindestens ein Teil einer Oberfläche des ersten Teils in physischen Kontakt mit mindestens einem Teil einer Oberfläche des zweiten Teils gebracht wird, um einen Schweißverbindungsbereich zu bilden, wobei das Verfahren ferner das Anwenden von NIR-Laserstrahlung auf das erste Teil umfasst, so dass die Strahlung im Wesentlichen durch das erste Teil hindurchgeht und von dem zweiten Teil absorbiert wird, so dass ausreichend Wärme erzeugt wird, um das erste Teil effektiv mit dem zweiten Teil des Gegenstands zu verschweißen.

13. Verfahren nach Anspruch 12, wobei der zweite Gegenstand ein Polymer umfasst, das aus der Gruppe ausgewählt ist, die aus Polycarbonat, Polyester, Polycarbonat-Copolymeren, Polyester-Copolymeren und Kombinationen davon besteht.

14. Verfahren nach Anspruch 12 oder 13, wobei der zweite Gegenstand ein NlR-absorbierendes Material umfasst, das aus der Gruppe ausgewählt ist, die aus organischen Farbstoffen, Metalloxiden, gemischten Metalloxiden, komplexen Oxiden, Metallsulfiden, Metallboriden, Metallphosphaten, Metallcarbonaten, Metallsulfaten, Metallnitriden, Lanthanhexaborid, Cäsiumwolframoxid, Indiumzinnoxid, Antimonzinnoxid, Indiumzinkoxid und Kombinationen davon besteht, wobei das NIR-absorbierende Material in der thermoplastischen Zusammensetzung des zweiten Teils in einer wirksamen Menge von 0,00001 bis 5 Gew.-%, bezogen auf das Gesamtgewicht der laserschweißbaren Zusammensetzung, vorhanden ist.

15. Lasergeschweißter, geformter Gegenstand, der ein erstes laserdurchlässiges Teil umfasst, das mit einem zweiten laserabsorbierenden Teil verschweißt ist, wobei das erste Teil ein Produkt umfasst, das durch ein Verfahren hergestellt wurde, das Schmelzmischen von Folgendem umfasst:
(a) 10 bis 70 Gewichtsprozent einer teilweise kristallinen thermoplastischen Polyesterkomponente, ausgewählt aus Poly(butylenterephthalat), Poly(ethylenterephthalat), Poly(butylenterephthalat)-Copolymeren, Poly(ethylenterephthalat)-Copolymeren und Kombinationen davon;
(b) 10 bis 60 Gewichtsprozent eines amorphen Polycarbonats mit mehr als 150 bis 10.000 ppm an umgelagerten Fries-Monomereinheiten;
(c) 5 bis 50 Gewichtsprozent eines Füllstoffs; und
(d) optional 0,01 bis 10 Gew.-% eines Antioxidationsmittels, Formtrennmittels, Farbstoffs, Stabilisators oder einer Kombination davon;
wobei die schmelzgemischte Zusammensetzung einen Gehalt an Polycarbonat-Arylhydroxy-Endgruppen von mindestens 300 ppm aufweist; und wobei die Zusammensetzung, wenn sie zu einem Gegenstand mit einer Dicke von 2,0 mm geformt wird, eine Transmission im nahen Infrarot bei 960 Nanometern von mehr als 45 % aufweist, wobei die Gehalte an Fries-Umlagerungsmonomereinheiten und an Polycarbonat-Arylhydroxy-Endgruppen sowie die Transmission im nahen Infrarot unter Verwendung der in der vorliegenden Beschreibung angegebenen Verfahren bestimmt werden.

## Revendications

1. Composition fabriquée par un procédé comprenant le mélange à l'état fondu :
(a) de 10 à 70 % en poids d'un composant polyester partiellement cristallin choisi parmi le poly(téréphtalate de butylène), le poly(téréphtalate d'éthylène), des copolymères de poly(téréphtalate de butylène), des copolymères de poly(téréphtalate d'éthylène) et une combinaisons de ceux-ci ;
(b) de 10 à 60 % en poids d'un polycarbonate amorphe ayant plus de 150 à 10000 ppm d'unités monomères de réarrangement de Fries ;
(c) de 5 à 50 % en poids d'une charge ; et
(d) éventuellement, de 0,01 à 10 % en poids d'un antioxydant, d'un agent de démoulage, d'un colorant, d'un stabilisant ou d'une combinaison de ceux-ci ;
dans laquelle la composition mélangée à l'état fondu a une teneur en groupes terminaux arylhydroxy polycarbonate d'au moins 300 ppm; et
dans laquelle la composition, lorsqu'elle est moulée en un article ayant une épaisseur de 2,0 mm, fournit une transmission dans le proche infrarouge à 960 nanomètres supérieure à 45%, dans laquelle la teneur en unité monomère de réarrangement de Fries et en groupes terminaux arylhydroxy de polycarbonate, et la transmission dans le proche infrarouge sont déterminées en utilisant les procédés spécifiés dans la présente description.

2. Composition selon la revendication 1, dans laquelle un article ayant une épaisseur de 2,0 mm et moulé à partir de la composition a une transmission dans le proche infrarouge à 960 nanomètres au moins 5 % supérieure à la même composition avec le polycarbonate remplacé par un polycarbonate comparable ayant moins de 150 ppm d'unités monomères de réarrangement de Fries, les unités monomères de transmission dans le proche infrarouge et de réarrangement de Fries étant déterminées selon les procédés spécifiés dans la présente description.

3. Composition selon la revendication 1 ou 2, dans laquelle le thermoplastique partiellement cristallin est le poly(téréphtalate de butylène).

4. Composition selon l'une quelconque des revendications 1 à 3, dans laquelle le polycarbonate amorphe comprend un polycarbonate de bisphénol A.

5. Composition selon l'une quelconque des revendications 1 à 4, dans laquelle le polycarbonate amorphe a au moins 250 ppm d'unités monomères de réarrangement de Fries, déterminées en utilisant le procédé spécifié dans la présente description.

6. Composition selon l'une quelconque des revendications 1 à 5, dans laquelle le polycarbonate est fabriqué par un procédé de polycondensation à l'état fondu.

7. Composition selon l'une quelconque des revendications 1 à 6, dans laquelle la charge est de la fibre de verre.

8. Composition selon la revendication 7 dans laquelle la fibre de verre introduite dans la masse fondue a un diamètre moyen de 3 à 30 micromètres et une longueur moyenne de 0,1 à 15 mm.

9. Composition selon la revendication 1,
dans laquelle le composant polyester partiellement cristallin est utilisé en une quantité de plus de 20 à 60 % en poids ;
dans laquelle le polycarbonate amorphe a plus de 250 à 10 000 ppm d'unités monomères de réarrangement de Fries et est utilisé en une quantité de 20 à 50 % en poids ;
dans laquelle la charge est une charge de verre et est utilisée en une quantité de 10 à 40 % en poids ;
dans laquelle les composants mélangés à l'état fondu comprennent éventuellement de 0,1 à 5 % en poids d'un antioxydant, d'un agent de démoulage, d'un colorant, d'un stabilisant ou d'une combinaison de ceux-ci ;
dans laquelle la teneur en groupes terminaux arylhydroxy polycarbonate est d'au moins 400 ppm ; et
dans laquelle un article ayant une épaisseur de 2,0 millimètres et moulé à partir de la composition a une transmission dans le proche infrarouge à 960 nanomètres supérieure à 50 %, et une température de ramollissement Vicat d'au moins 130°C selon ISO 306 à 120°C/heure et 50 N de charge, dans laquelle la teneur en unités monomères de réarrangement de Fries et la transmission
dans le proche infrarouge sont déterminées en utilisant les procédés spécifiés dans la présente description.

10. Composition selon la revendication 9, dans laquelle un article ayant une épaisseur de 2,0 mm et moulé à partir de la composition a une transmission dans le proche infrarouge à 960 nanomètres supérieure à 55 %, déterminée en utilisant le procédé spécifié dans la présente description.

11. Composition selon la revendication 1,
dans laquelle le composant polyester partiellement cristallin est le poly(téréphtalate de butylène) et est utilisé en une quantité de plus de 20 à 60 % en poids ;
dans laquelle le polycarbonate amorphe est un polycarbonate de bisphénol A amorphe ayant plus de 300 à 10 000 ppm d'unités monomères de réarrangement de Fries et est utilisé en une quantité de 20 à 50 % en poids ;
dans laquelle la charge est une charge de verre et est utilisée en une quantité de 10 à 40 % en poids ;
dans laquelle les composants mélangés à l'état fondu comprennent l'antioxydant, l'agent de démoulage, le colorant, le stabilisant ou une combinaison de ceux-ci en une quantité de 0,1 à 5 % en poids ;
dans laquelle la teneur en groupes terminaux arylhydroxy polycarbonate est d'au moins 500 ppm ; et
dans laquelle l'article ayant une épaisseur de 2,0 mm et moulé à partir de la composition a une transmission dans le proche infrarouge à 960 nanomètres supérieure à 55 %, et une température de ramollissement Vicat de 135°C à 190°C selon ISO 306 à 120°C/ heure et une charge de 50 N, dans laquelle les teneurs en unité monomère de réarrangement de Fries et en groupes terminaux arylhydroxy de polycarbonate, et la transmission dans le proche infrarouge sont déterminées en utilisant les procédés spécifiés dans la présente description.

12. Procédé de soudage d'une première partie de transmission de laser à une deuxième partie d'absorption de laser d'un article, dans lequel la première partie comprend la composition de la revendication 1 et la deuxième partie comprend une composition thermoplastique comprenant un agent absorbant le NIR, et où au moins une partie d'une surface de la première partie est placée en contact physique avec au moins une partie d'une surface de la deuxième partie pour former une zone de jonction par soudage, le procédé comprenant en outre l'application d'un rayonnement laser NIR à la première partie de sorte que le rayonnement traverse sensiblement la première partie et est absorbé par la deuxième partie de sorte qu'une chaleur suffisante est générée pour souder efficacement la première partie à la deuxième partie de l'article.

13. Procédé selon la revendication 12, dans lequel le deuxième article comprend un polymère choisi dans le groupe constitué par le polycarbonate, le polyester, les copolymères de polycarbonate, les copolymères de polyester et les combinaisons de ceux-ci.

14. Procédé selon la revendication 12 ou 13, dans lequel le deuxième article comprend un matériau absorbant le NIR choisi dans le groupe constitué par les colorants organiques, les oxydes métalliques, les oxydes métalliques mixtes, les oxydes complexes, les sulfures métalliques, les borures métalliques, les phosphates métalliques, les carbonates métalliques, les sulfates métalliques, les nitrures métalliques, l'hexaborure de lanthane, l'oxyde de césium et de tungstène, l'oxyde d'indium et d'étain, l'oxyde d'antimoine et d'étain, l'oxyde d'indium et de zinc, et les combinaisons de ceux-ci, dans lequel le matériau absorbant le NIR est présent dans la composition thermoplastique de la deuxième partie en une quantité efficace de 0,00001 à 5 % en poids, sur la base du poids total de la composition soudable au laser.

15. Article moulé, soudé au laser comprenant une première partie de transmission de laser soudée à une deuxième partie d'absorption de laser, dans lequel la première partie comprend un produit fabriqué par un procédé comprenant le mélange à l'état fondu :
(a) de 10 à 70 % en poids d'un un composant polyester thermoplastique partiellement cristallin choisi parmi le poly(téréphtalate de butylène), le poly(téréphtalate d'éthylène), les copolymères de poly(téréphtalate de butylène), les copolymères de poly(téréphtalate d'éthylène) et les combinaisons de ceux-ci ;
(b) de 10 à 60 % en poids d'un polycarbonate amorphe ayant plus de 150 à 10000 ppm d'unités monomères de réarrangement de Fries ;
(c) de 5 à 50 % en poids d'une charge ; et
(d) éventuellement, de 0,01 à 10 % en poids d'un antioxydant, d'un agent de démoulage, d'un colorant, d'un stabilisant ou d'une combinaison de ceux-ci ;
dans lequel la composition mélangée à l'état fondu a une teneur en groupes terminaux arylhydroxy polycarbonate d'au moins 300 ppm ; et dans lequel la composition, lorsqu'elle est moulée en un article ayant une épaisseur de 2,0 mm, fournit une transmission dans le proche infrarouge à 960 nanomètres supérieure à 45 %, dans lequel les teneurs en unité monomère de réarrangement de Fries et en groupes terminaux arylhydroxy polycarbonate, et la transmission infrarouge sont déterminées selon les procédés spécifiés dans la présente description.
